# EUROPEAN PATENT APPLICATION

(11) **EP 4 016 396 A1**
(43) Date of publication of application: **22.06.2022**
(21) Application number: 20882057.1
(22) Date of filing: 11.06.2020
(51) Int. Cl.: G06N 3/063, H04L 29/08

(54) **AI PROCESSING METHOD AND DEVICE**

(30) Priority: 29.10.2019 CN 201911038304
(71) Applicant: Huawei Technologies Co., Ltd., Longgang District Shenzhen, Guangdong 518129 (CN)
(72) Inventor: LIU, Hongkuan, Shenzhen, Guangdong 518129 (CN); HUI, Weifeng, Shenzhen, Guangdong 518129 (CN); CAI, Shishun, Shenzhen, Guangdong 518129 (CN)
(74) Representative: Goddar, Heinz J.
(86) International application number: PCT/CN2020/095570
(87) International publication number: WO 2021/082460

(57) **Abstract**

This application provides an AI processing method and apparatus, and relates to the field of artificial intelligence, to implement low-cost real-time data stream AI processing through easy deployment without requiring a device capability. A specific solution is as follows: A computing device obtains characteristic information of a user of the computing device (S501). The characteristic information is used to indicate a behavior habit and/or a hobby of the user. The computing device sends the obtained characteristic information of the user to a cloud service (S502). The computing device receives an AI processing result from the cloud service (S506). The AI processing result is obtained by the cloud service by performing AI processing on a data stream of the computing device based on the characteristic information of the user of the computing device (S504).

## Description

### TECHNICAL FIELD

This application relates to the field of artificial intelligence (artificial intelligence, AI), and in particular, to an AI processing method and apparatus.

### BACKGROUND

AI is a new technology science for researching and developing a theory, a method, a technology, and an application system for simulating, extending, and expanding human intelligence. AI processing may be performed by using an AI technology on an intelligent electronic device (such as a smartphone or a smart TV), to simulate and implement human intelligence in different scenarios. For example, the AI technology may be used to implement mobile phone object recognition software, reverse image search software, smart TV object recognition software, and the like, so as to provide an intelligent service based on a recognition result, to improve intelligent user experience.

An AI processing process includes training and inference. The training is to use massive data as an input to train a deep neural network model. The inference is to input to-be-determined data into a trained deep neural network model, to "infer" various conclusions as AI processing results. For example, AI processing may identify people, objects, or scenarios in data. Content of the AI processing results varies in different scenarios. For example, for object recognition software, the AI processing result may be annotation information (such as a physical name or an attribute) of a recognized object. For example, for advertisement push software, the AI processing result may be advertisement push content.

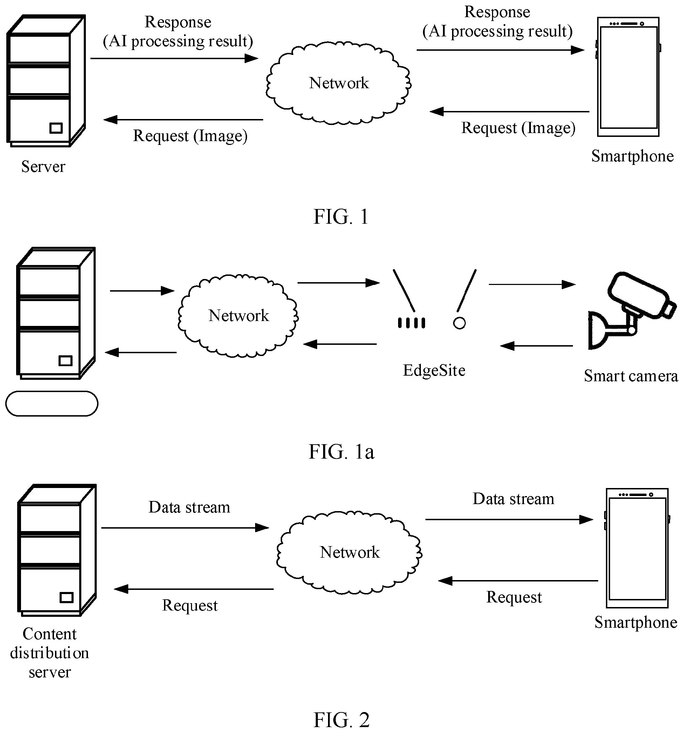

Currently, one AI processing process is request-response, for example, a process of image recognition in a smartphone. In the AI processing scenario shown in FIG. 1, a smartphone generates an image (the image may come from a camera of the phone or be downloaded from another channel). The smartphone sends the image to a server by using a network, and the server performs AI processing and sends a result obtained after the AI processing to the smartphone for display. The AI processing process is a typical request-response process. In a server AI processing phase, the smartphone is waiting for the result and cannot perform real-time AI processing on a data stream.

Another AI processing process is that the electronic device performs AI processing. The electronic device has an AI processing capability, and may perform AI processing in real time. This solution can process a data stream in real time, but has a high requirement on the electronic device.

Still another AI processing process is that, in a scenario in which an Intelligent EdgeSite is deployed between the server and the electronic device, the Intelligent EdgeSite performs AI processing. In the intelligent video surveillance scenario shown in FIG. 1a, an intelligent camera synchronizes an image data stream to an Intelligent EdgeSite in real time, and the Intelligent EdgeSite performs AI processing, and directly displays an AI processing result to a user or returns the result to the camera for display. In this solution, AI processing is performed on a data stream in real time. However, this solution is applicable only to real-time surveillance scenarios. Edge intelligent nodes need to be deployed, which is costly and difficult to deploy on a large scale.

Therefore, how to implement low-cost real-time data stream AI processing through easy deployment without requiring a device capability becomes an urgent problem to be resolved.

### SUMMARY

This application provides an AI processing method and apparatus, to implement low-cost real-time data stream AI processing through easy deployment without requiring a device capability.

To achieve the foregoing objective, the following technical solutions are used in this application.

According to a first aspect, an AI processing method is provided. The method is applied to a computing device, and the method may include: The computing device obtains characteristic information of a user of the computing device. The characteristic information is used to indicate a behavior habit and/or a hobby of the user. The computing device sends the obtained characteristic information of the user to a cloud service. The computing device receives an AI processing result from the cloud service. The AI processing result is obtained by the cloud service by performing AI processing on the data stream of the computing device based on the characteristic information of the user of the computing device.

According to the AI processing method provided in this application, the cloud service is configured, when there is a data stream sent to the computing device, the cloud service performs AI processing on the data stream in real time, and the computing device receives the AI processing result from the cloud service in real time. In this process, an existing architecture is used, and real-time AI processing of the data stream is performed on a server under a condition that costs are not increased, deployment is simple, and a computing device capability is not required.

A cloud service interacting with a computing device may be mapped to the computing device. A program (for example, an application (application, APP)) in the computing device is mapped to a corresponding cloud service. The computing device may request the data stream from a content distribution server through the cloud service.

With reference to the first aspect, in a possible implementation, the AI processing method provided in this application may further include: Before sending the characteristic information of the user to the cloud service, the computing device sends a registration request to a cloud server. The registration request is used by the cloud server to configure the cloud service.

For example, the registration request may be used by the cloud server to configure the cloud service corresponding to the computing device that sends the registration request.

With reference to the first aspect or any one of the foregoing possible implementations, in another possible implementation, the cloud server and the content distribution server that sends the data stream may be a same server, or the cloud server and the content distribution server that sends the data stream are different servers.

With reference to the first aspect or any one of the foregoing possible implementations, in another possible implementation, the cloud service may be a virtual device configured according to a virtual machine technology or a container technology, to implement mutual isolation of cloud services corresponding to different terminal devices.

With reference to the first aspect or any one of the foregoing possible implementations, in another possible implementation, the AI processing method provided in this application may further include: Before receiving the AI processing result from the cloud service, the computing device obtains a configuration parameter of the user, and sends the configuration parameter to the cloud service. The configuration parameter may include one or more of the following content: enabling or disabling an AI function, enabling or disabling a character recognition function, enabling or disabling an object recognition function, enabling or disabling a character psychological activity recognition function, enabling or disabling a character emotion recognition function, or enabling or disabling a scenario recognition function. Correspondingly, that the computing device receives the AI processing result from the cloud service may be specifically implemented as follows: The computing device receives the AI processing result from the cloud service. The AI processing result is obtained by the cloud service by performing AI processing on the data stream of the computing device based on the characteristic information and the configuration parameter.

With reference to the first aspect or any one of the foregoing possible implementations, in another possible implementation, the characteristic information of the user may include user behavior information and/or user interest information. The user behavior element information is used to indicate a characteristic of a behavior of the user using the computing device, and the user behavior information may include one or more pieces of the following information: loyal commodity brand information, commonly used APP information, and online duration information. The user interest information is used to indicate one or more interest types of the user.

With reference to the first aspect or any one of the foregoing possible implementations, in another possible implementation, the AI processing result may include one or more of the following content: advertisement placement, object marking, and a commentary.

With reference to the first aspect or any one of the foregoing possible implementations, in another possible implementation, the data stream may include one or more of the following content: a video stream, an image stream, and a text stream.

It should be noted that the cloud service described in this application may be the cloud server corresponding to the computing device. Communication between the computing device and the cloud service described in this specification (for example, the computing device sends content to the cloud service, or the computing device receives content from the cloud service, or the cloud service sends content to the computing device, or the cloud service receives content from the computing device) may be replaced as that the computing device communicates with the corresponding cloud service.

In a possible implementation, when there are a plurality of computing devices (for example, a plurality of smartphones that perform a data service), the cloud server may configure one cloud service corresponding to each computing device.

Optionally, cloud services corresponding to different computing devices may be isolated from each other.

According to a second aspect, another AI processing method is provided. The method may be applied to a cloud server, and a cloud service is configured in the cloud server. The method may include: The cloud server receives characteristic information of a user of a computing device from the computing device. The characteristic information is used to indicate a behavior habit and/or a hobby of the user. The cloud server performs AI processing on a data stream based on the characteristic information of the user, to obtain an AI processing result. The cloud server sends the AI processing result to the computing device.

According to the AI processing method provided in this application, the cloud service is configured, when there is a data stream sent to the computing device, the cloud service performs AI processing on the data stream in real time, and the computing device receives the AI processing result from the cloud service in real time. In this process, an existing architecture is used, and real-time AI processing of the data stream is performed on a server under a condition that costs are not increased, deployment is simple, and a computing device capability is not required.

The data stream may be a data stream of the computing device, and may be understood as a data stream sent to the computing device.

With reference to the second aspect, in a possible implementation, the cloud server may be a content distribution server.

With reference to the second aspect, in another possible implementation, the cloud server and the content distribution server that provides the data stream are different servers. The AI processing method provided in this application may further include: Before performing AI processing on the data stream based on the characteristic information, the cloud server obtains the data stream of the computing device from the content distribution server.

With reference to the second aspect or any one of the foregoing possible implementations, in another possible implementation, that the cloud server obtains the data stream of the computing device from the content distribution server may be specifically implemented as follows: requesting the data stream of the computing device from the content distribution server; and receiving the data stream of the computing device from the content distribution server.

With reference to the second aspect or any one of the foregoing possible implementations, in another possible implementation, before the performing AI processing on a data stream based on the characteristic information, the AI processing method provided in this application may further include: The cloud server receives the data stream from the content distribution server.

With reference to the second aspect or any one of the foregoing possible implementations, in another possible implementation, the cloud service may be a virtual device configured according to a virtual machine technology or a container technology.

With reference to the second aspect or any one of the foregoing possible implementations, in another possible implementation, the AI processing method provided in this application may further include: Before performing AI processing on the data stream based on the characteristic information, to obtain the AI processing result, the cloud server receives a configuration parameter from the computing device. The configuration parameter may include one or more of the following content: enabling or disabling an AI function, enabling or disabling a character recognition function, enabling or disabling an object recognition function, enabling or disabling a character psychological activity recognition function, enabling or disabling a character emotion recognition function, or enabling or disabling a scenario recognition function. Correspondingly, that the cloud server performs AI processing on a data stream based on the characteristic information, to obtain an AI processing result may be specifically implemented as follows: performing AI processing on the data stream based on the characteristic information and the configuration parameter, to obtain the AI processing result.

With reference to the second aspect or any one of the foregoing possible implementations, in another possible implementation, the characteristic information of the user may include user behavior information and/or user interest information. The user behavior element information is used to indicate a characteristic of a behavior of the user using the computing device, and the user behavior information may include one or more pieces of the following information: loyal commodity brand information, commonly used APP information, and online duration information. The user interest information is used to indicate one or more interest types of the user.

With reference to the second aspect or any one of the foregoing possible implementations, in another possible implementation, the AI processing result may include one or more of the following content: advertisement placement, object marking, and a commentary.

With reference to the second aspect or any one of the foregoing possible implementations, in another possible implementation, the data stream may include one or more of the following content: a video stream, an image stream, and a text stream.

It should be noted that the AI processing method provided in the second aspect of this application and the AI processing method provided in the first aspect are descriptions from different perspectives of a same technical solution. For specific implementations, reference may be made to each other.

According to a third aspect, this application provides an AI processing apparatus. The AI processing apparatus may be a computing device, or may be an apparatus or a chip system in the computing device, or an apparatus that can match the computing device. The AI processing apparatus may implement functions performed by the computing device in the foregoing aspects or the possible designs, and the functions may be implemented by hardware, or may be implemented by hardware executing corresponding software. The hardware or the software includes one or more modules corresponding to the foregoing functions. For example, the AI processing apparatus may include an obtaining unit, a sending unit, and a receiving unit.

The obtaining unit is configured to obtain characteristic information of a user of the AI processing apparatus. The characteristic information is used to indicate a behavior habit and/or a hobby of the user.

The sending unit is configured to send the characteristic information obtained by the obtaining unit to a cloud service.

The receiving unit is configured to receive an AI processing result from the cloud service. The AI processing result is obtained by the cloud service by performing AI processing on a data stream of the AI processing apparatus based on the characteristic information.

It should be noted that the AI processing apparatus provided in the third aspect is configured to perform the AI processing method provided in the first aspect. For specific implementation, refer to the specific implementation of the first aspect.

According to a fourth aspect, this application provides an AI processing apparatus. The AI processing apparatus may be a cloud server, or may be an apparatus or a chip system in the cloud server, or an apparatus that can match the cloud server. A cloud service is configured in the cloud server. The AI processing apparatus may implement functions performed by the cloud server in the foregoing aspects or the possible designs, and the functions may be implemented by hardware, or may be implemented by hardware executing corresponding software. The hardware or the software includes one or more modules corresponding to the foregoing functions. For example, the AI processing apparatus may include a receiving unit, a processing unit, and a sending unit.

The receiving unit is configured to receive characteristic information of a user of a computing device from the computing device. The characteristic information is used to indicate a behavior habit and/or a hobby of the user.

The processing unit is configured to perform AI processing on a data stream based on the characteristic information obtained by the receiving unit, to obtain an AI processing result.

The sending unit is configured to send the AI processing result obtained by the processing unit to the computing device.

It should be noted that the AI processing apparatus provided in the fourth aspect is configured to perform the AI processing method provided in the second aspect. For specific implementation, refer to the specific implementation of the second aspect.

According to a fifth aspect, this application provides a computing device. The computing device may include a processor and a memory. The processor is coupled to the memory. The memory may be configured to store computer instructions. The processor is configured to invoke the computer instructions to perform the AI processing method according to any one of the first aspect or the possible implementations.

According to a sixth aspect, this application provides a cloud server. The cloud server may include a processor and a memory. The processor is coupled to the memory. The memory may be configured to store computer instructions. The processor is configured to invoke the computer instructions to perform the AI processing method according to any one of the second aspect or the possible implementations.

According to a seventh aspect, this application provides a computer-readable storage medium. The computer-readable storage medium may include computer software instructions. When the computer software instructions are run on a computing device, the computing device is enabled to perform the AI processing method according to any one of the first aspect or the possible implementations of the first aspect.

According to an eighth aspect, this application provides a computer-readable storage medium. The computer-readable storage medium may include computer software instructions. When the computer software instructions are run on a cloud server, the cloud server is enabled to perform the AI processing method according to any one of the second aspect or the possible implementations of the second aspect.

According to a ninth aspect, this application provides a computer program product. When the computer program product runs on a computer, the computer is enabled to perform the AI processing method according to any one of the first aspect or the possible implementations.

According to a tenth aspect, this application provides a chip system. The chip system is applied to a computing device. The computing device includes an interface circuit and a processor. The interface circuit and the processor are interconnected through a line. The interface circuit is configured to receive a signal from a memory of the computing device, and send the signal to the processor. The signal includes computer instructions stored in the memory. When the processor executes the computer instructions, the chip system performs the AI processing method according to any one of the first aspect or the possible implementations.

According to an eleventh aspect, this application provides a chip system. The chip system is applied to a cloud server. The cloud server includes an interface circuit and a processor. The interface circuit and the processor are interconnected through a line. The interface circuit is configured to receive a signal from a memory of the cloud server, and send the signal to the processor. The signal includes computer instructions stored in the memory. When the processor executes the computer instructions, the chip system performs the AI processing method according to any one of the second aspect or the possible implementations.

According to a twelfth aspect, this application provides an AI processing system, including a computing device and a cloud server. The computing device performs the AI processing method according to any one of the first aspect or the possible implementations of the first aspect, and the cloud server performs the AI processing method according to any one of the second aspect or the possible implementations of the second aspect.

According to a thirteenth aspect, this application provides another AI processing system, including a computing device and a cloud server, and a cloud service is configured in the cloud server. The computing device is configured to: obtain characteristic information of a user of the computing device, where the characteristic information is used to indicate a behavior habit and/or a hobby of the user; and send the obtained characteristic information of the user to the cloud service. The cloud server is configured to: receive the characteristic information of the user of the computing device from the computing device, where the characteristic information is used to indicate the behavior habit and/or the hobby of the user; perform AI processing on a data stream of the computing device based on the characteristic information of the user, to obtain an AI processing result; and send the AI processing result to the computing device. The computing device is further configured to receive the AI processing result from the cloud service. The AI processing result is obtained by the cloud service by performing AI processing on the data stream of the computing device based on the characteristic information of the user of the computing device.

It should be understood that descriptions of technical features, technical solutions, beneficial effects, or similar words in this application do not imply that all features and advantages can be implemented in any individual embodiment. On the contrary, it may be understood that descriptions of the features or the beneficial effects mean that at least one embodiment includes a specific technical feature, technical solution, or beneficial effect. Therefore, the descriptions of the technical features, the technical solutions, or the beneficial effects in this specification may not necessarily belong to one embodiment. Further, the technical features, the technical solutions, and the beneficial effects described in the embodiments may be combined in any proper manner. A person skilled in the art understands that an embodiment may be implemented without one or more specific technical features, technical solutions, or beneficial effects in a specific embodiment. In other embodiments, additional technical features and beneficial effects may be further identified in a specific embodiment that does not reflect all the embodiments.

### BRIEF DESCRIPTION OF DRAWINGS

FIG. 1 is a schematic diagram of an AI processing scenario in the conventional technology;
FIG. 1a is a schematic diagram of another AI processing scenario in the conventional technology;
FIG. 2 is a schematic architectural diagram of a data service system in the conventional technology;
FIG. 3 is a schematic architectural diagram of a data service system in the conventional technology;
FIG. 4 is a schematic diagram of a structure of an AI processing apparatus according to an embodiment of this application;
FIG. 5 is a schematic flowchart of an AI processing method according to an embodiment of this application;
FIG. 6 is a schematic flowchart of another AI processing method according to an embodiment of this application;
FIG. 7 is a schematic diagram of a structure of another AI processing apparatus according to an embodiment of this application;
FIG. 8 is a schematic diagram of a structure of still another AI processing apparatus according to an embodiment of this application;
FIG. 9 is a schematic diagram of a structure of yet another AI processing apparatus according to an embodiment of this application; and
FIG. 10 is a schematic diagram of a structure of still yet another AI processing apparatus according to an embodiment of this application.

### DESCRIPTION OF EMBODIMENTS

In this specification, claims, and accompanying drawings of this application, the terms "first", "second", "third", and the like are intended to distinguish between different objects but do not limit a particular order.

In the embodiments of this application, the word such as "example" or "for example" is used to represent giving an example, an illustration, or a description. Any embodiment or design scheme described as an "example" or "for example" in the embodiments of this application should not be explained as being more preferred or having more advantages than another embodiment or design scheme. Exactly, use of the word "example" or "for example" or the like is intended to present a related concept in a specific manner.

For ease of understanding, terms in this application are explained first.

A data stream may be a data set sent to a computing device, and the data stream may include but is not limited to one or more of the following content: a video stream, an image stream, a text stream, and the like.

A content distribution server may be a server that provides the data stream for the computing device. The data stream may be a service data stream or another data stream. This is not specifically limited in the embodiments of this application. The content distribution server may provide the data stream for the computing device according to a rule or according to a request of the computing device.

A cloud server may be a server deployed on cloud to implement a centralized service.

The computing device may be a data stream requirement device. After obtaining the data stream, the computing device may display the data stream or perform corresponding processing. Alternatively, after obtaining the data stream, the computing device displays the data stream by using another device. Alternatively, after obtaining the data stream, the computing device displays the data stream by using another device after performing corresponding processing. This is not limited in this application. The computing device may be a server or a terminal device. An actual product form of the computing device is not limited in this application.

AI processing may include training and inference. The training is to train a network model (for example, a complex deep neural network model) by using massive data as an input. The inference is to use a trained network model and to-be-determined data to "infer" various conclusions, and use the conclusions as AI processing results. Content of the conclusions obtained through inference varies in different scenarios. For example, for object recognition software, a processing result is annotation information such as a physical name or an attribute of a recognized object.

Currently, in the data service system shown in FIG. 2, the computing device may request to obtain the data stream from the content distribution server. After a computing device that does not have an AI processing capability obtains a data stream or generates a data stream, if AI processing needs to be performed, AI processing is performed in the foregoing request-response manner. This process is time-consuming, and real-time AI processing of the data stream cannot be implemented on a server.

Based on this, an embodiment of this application provides an AI processing method. A cloud service is configured, where a program and an operation of a computing device are mapped to the cloud service, an AI processing requirement of the computing device is mapped to the cloud service, and the cloud service uses an AI processing capability of a server to perform AI processing on a data stream of the computing device in real time, so that when the computing device does not have an AI processing capability, the server implements real-time AI processing of the data stream.

The following describes the implementation of this embodiment of this application in detail with reference to an accompanying drawing.

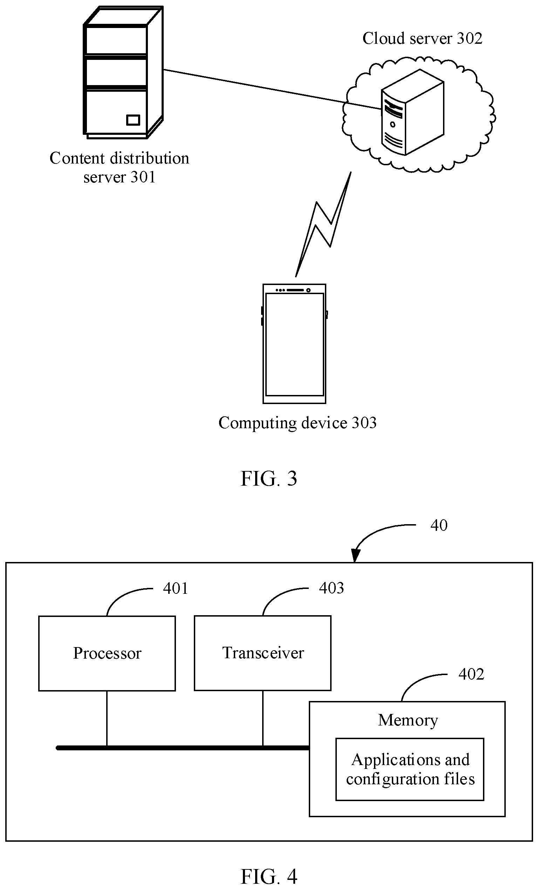

The AI processing method provided in this embodiment of this application may be applied to a data service system shown in FIG. 3. As shown in FIG. 3, the data service system may include a content distribution server 301, a cloud server 302, and a computing device 303.

A cloud service 3021 is configured in the cloud server 302. The computing device 303 requests a data stream from the content distribution server 301 through the cloud service 3021. The content distribution server 301 sends the data stream to the computing device 303 through the cloud service 3021.

In a possible implementation, when receiving, from the content distribution server 301, a data stream sent to the computing device 303 (which may also be referred to as a data stream of the computing device 303), the cloud service 3021 may perform AI processing on the data stream, and send the data stream and an AI processing result of the data stream to the computing device 303.

In a possible implementation, the cloud service 3021 may perform AI processing on the data stream of the computing device 303 according to a configuration of the computing device 303, and send the data stream and the AI processing result of the data stream to the computing device 303.

Further, the computing device 303 may display the AI processing result, or the computing device 303 may send the AI processing result to another device for display. This is not limited in this embodiment of this application.

The content distribution server 301 may be a server of a content provider. The cloud server 302 may be a server that provides a cloud service.

In a possible implementation, the cloud server 302 is the content distribution server 301.

In another possible implementation, the cloud server 302 and the content distribution server 301 are separately deployed, and the cloud server 302 and the content distribution server 301 communicate with each other by using a hypertext transport protocol (hypertext transport protocol, HTTP).

The computing device 303 may be a server, a terminal device, or another device. A specific product form of the computing device 303 is not limited in this embodiment of this application.

The terminal device in this embodiment of this application may be a device having a wireless transceiver function. The terminal device may be deployed on the land, for example, the terminal device is an indoor device, an outdoor device, a handheld device, or a vehicle-mounted device; or the terminal device may be deployed on the water (for example, on a ship); or the terminal device may be deployed in the air (for example, on a plane, a balloon, or a satellite). The terminal device may be user equipment (user equipment, UE), and the UE is a handheld device, a vehicle-mounted device, a wearable device, or another device that has a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self driving, a wireless terminal in remote medical, a wireless terminal in a smart grid, a wireless terminal in a smart city (smart city), a wireless terminal in a smart home (smart home), or the like.

It should be noted that an architecture of the data service system shown in FIG. 3 is merely an example architectural diagram, and a quantity of network elements included in the architecture shown in FIG. 3 is not limited in this embodiment of this application. Although not shown, in addition to the network elements shown in FIG. 3, the system shown in FIG. 3 may further include another functional entity. In addition, the naming of the network element in the architecture in FIG. 3 is merely an example, and is not limited.

The following describes the embodiments of this application in detail with reference to the accompanying drawings.

According to one aspect, an embodiment of this application provides an AI processing apparatus, configured to perform the AI processing method provided in this application. The AI processing apparatus may be deployed in the computing device or the cloud server in the data service system shown in FIG. 3. FIG. 4 shows an AI processing apparatus 40 related to the embodiments of this application. As shown in FIG. 4, the AI processing apparatus 40 may include a processor 401, a memory 402, and a transceiver 403.

The following describes each component of the AI processing apparatus 40 in detail with reference to FIG. 4.

The memory 402 may be a volatile memory (volatile memory), such as a random access memory (random-access memory, RAM); or a nonvolatile memory (nonvolatile memory), such as a read-only memory (read-only memory, ROM), a flash memory (flash memory), a hard disk drive (hard disk drive, HDD), or a solid-state drive (solid-state drive, SSD); or a combination of the foregoing types of memories. The memory 402 is configured to store program code, a configuration file, or other content that can implement the method in this application.

The processor 401 is a control center of the AI processing apparatus 40. For example, the processor 401 may be a central processing unit (central processing unit, CPU), or may be an application specific integrated circuit (application specific integrated circuit, ASIC), or may be configured as one or more integrated circuits implementing the embodiments of this application, for example, one or more microprocessors (digital signal processor, DSP), or one or more field programmable gate arrays (field programmable gate arrays, FPGAs).

The transceiver 403 is configured to communicate with another device.

In a possible implementation, when the AI processing apparatus 40 is deployed in the computing device, the processor 401 runs or executes software programs and/or modules stored in the memory 402, and invokes data stored in the memory 402, to execute the following functions:
obtaining characteristic information of a user of the computing device, where the characteristic information is used to indicate a behavior habit and/or a hobby of the user; sending the obtained characteristic information of the user to a cloud service through the transceiver 403; and receiving an AI processing result from the cloud service through the transceiver 403, where the AI processing result is obtained by the cloud service by performing, based on the characteristic information of the user of the computing device in which the AI processing apparatus 40 is located, AI processing on a data stream of the computing device in which the AI processing apparatus 40 is located.

In another possible implementation, when the AI processing apparatus 40 is deployed in the cloud server, the processor 401 runs or executes software programs and/or modules stored in the memory 402, and invokes data stored in the memory 402, to execute the following functions:
receiving the characteristic information of the user of the computing device from the computing device, where the characteristic information is used to indicate the behavior habit and/or the hobby of the user; performing AI processing on the data stream based on the characteristic information of the user, to obtain the AI processing result; and sending the AI processing result to the computing device.

According to another aspect, an embodiment of this application provides an AI processing method. The method may be applied to a process of interaction between the cloud server 302 and the computing device 303 in the data service system shown in FIG. 3. A cloud service is configured in the cloud server.

When the cloud server communicates with a plurality of computing devices, the cloud server may configure a cloud service corresponding to each computing device. The cloud service described in this application may be a cloud server corresponding to the computing device. Communication between the computing device and the cloud service described in this specification (for example, the computing device sends content to the cloud service, or the computing device receives content from the cloud service, or the cloud service sends content to the computing device, or the cloud service receives content from the computing device) may be replaced as that the computing device communicates with the corresponding cloud service.

A process of interaction between the cloud server and different computing devices is a process of interaction between cloud services respectively corresponding to different computing devices and corresponding computing devices that are in the cloud server. In this embodiment of this application, a process of interaction between the cloud server and one computing device is used as an example to describe the AI processing method provided in this embodiment of this application. A process of interaction between the cloud server and each computing device is similar, and details are not described again.

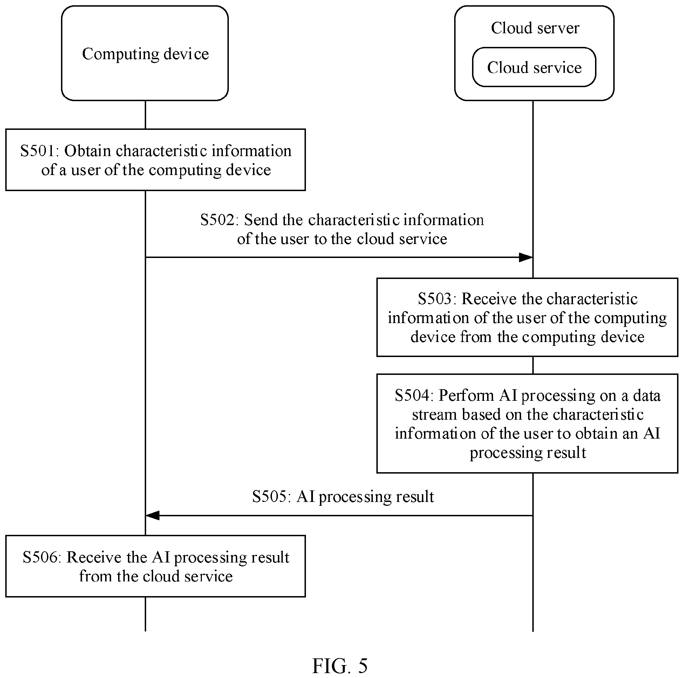

As shown in FIG. 5, the AI processing method provided in this embodiment of this application may include the following steps:
S501: A computing device obtains characteristic information of a user of the computing device.

The user of the computing device may be a user using the computing device.

Specifically, the characteristic information may be used to indicate a behavior habit and/or a hobby of the user.

For example, the characteristic information of the user may include user behavior information and/or user interest information. The user behavior element information is used to indicate a characteristic of a behavior of the user using the computing device, and the user behavior information may include one or more pieces of the following information: loyal commodity brand information, commonly used APP information, and online duration information. The user interest information is used to indicate one or more interest types of the user.

An interest type may include but is not limited to fashion, sports, reading, travel, food, social communication, or the like.

In a possible implementation, the computing device may learn and record the characteristic information of the user in a process in which the user uses the computing device. Certainly, a process in which the computing device obtains the characteristic information is not limited in this embodiment of this application.

S502: The computing device sends the characteristic information of the user to a cloud service.

The cloud service may be corresponding to the computing device. The cloud service may be a virtual device configured in a cloud server.

In a possible implementation, cloud services corresponding to different computing devices may be isolated from each other. For example, the cloud service may be a virtual device configured according to a virtual machine technology or a container technology.

Specifically, in S502, that the computing device sends the characteristic information of the user to a cloud service corresponding to the computing device may alternatively be: The computing device sends the characteristic information of the user to a cloud server, where a cloud service is configured in the cloud server.

In a possible implementation, the cloud server may be a content distribution server.

In another possible implementation, the cloud server and the content distribution server may be different servers.

It should be noted that, during actual application, a deployment manner of the cloud server may be configured based on an actual requirement. This is not limited in this embodiment of this application.

S503: The cloud server receives the characteristic information of the user of the computing device from the computing device.

The characteristic information of the user received by the cloud server in S503 is the characteristic information sent by the computing device in S502. Details are not described herein again.

S504: The cloud server performs AI processing on a data stream based on the characteristic information of the user to obtain an AI processing result.

The data stream may be a data stream of the computing device, and may be understood as a data stream sent to the computing device.

Optionally, the data stream may be received by the cloud server from the content distribution server. Certainly, the data stream may also be obtained by the cloud server in another manner. This is not limited in this embodiment of this application.

Correspondingly, the AI processing method provided in this embodiment of this application may further include: The cloud server receives the data stream from the content distribution server.

Further, before the cloud server receives the data stream from the content distribution server, the AI processing method provided in this embodiment of this application may further include: The cloud server receives a request message of the computing device, and requests the data stream of the computing device from the content distribution server based on the request message.

In a possible implementation, the cloud server is the content distribution server, and the cloud server reads, in the content distribution server according to the request of the computing device, the data stream requested by the computing device, and uses the data stream as the data stream of the computing device.

In another possible implementation, the cloud server and the content distribution server are different servers, and that the cloud server obtains the data stream of the computing device from the content distribution server in S504 may be specifically implemented as follows: The cloud server requests the data stream from the content distribution server; and the cloud server receives the requested data stream from the content distribution server.

Specifically, a type of the data stream is related to a type of a service performed by the computing device. This is not limited in this application. For example, the data stream may include one or more of the following content: a video stream, an image stream, or a text stream.

Specifically, in S504, the cloud server inputs the characteristic information of the user and the data stream into a trained network model, obtains a conclusion through inference, and uses the inference conclusion as the AI processing result. A process of AI processing and a form of the result are not specifically limited in this embodiment of this application.

For example, the computing device is a smartphone, the smartphone performs a video playback service, the data stream of the computing device may be a video stream, AI processing may be identifying a person, an object, and a scenario in an image in the video stream, and the AI processing result obtained with reference to the characteristic information of the user may include information such as targeted advertisement pushing and object marking.

For example, the computing device is an e-book, the e-book performs a text reading service, the data stream of the computing device is a text stream, AI processing may be identifying a text in the text stream of the e-book, and the AI processing result obtained with reference to the characteristic information of the user may include information such as a text commentary.

S505: The cloud server sends the AI processing result to the computing device.

S506: The computing device receives the AI processing result from the cloud service.

Specifically, that the computing device receives the AI processing result from the cloud service in S506 may be understood as follows: The computing device receives the AI processing result from the cloud service corresponding to the computing device. During actual application, from a perspective of a device, S507 may alternatively be: The computing device receives the AI processing result from the cloud server on which the cloud service is located.

The AI processing result is sent by the cloud server in S505, and the AI processing result is obtained by the cloud service by performing AI processing on the data stream of the computing device based on the characteristic information.

According to the AI processing method provided in this application, the cloud service is configured, when there is a data stream sent to the computing device, the cloud service performs AI processing on the data stream in real time, and the computing device receives the AI processing result from the cloud service in real time. In this process, an existing architecture is used, and real-time AI processing of the data stream is performed on a server under a condition that costs are not increased, deployment is simple, and a computing device capability is not required.

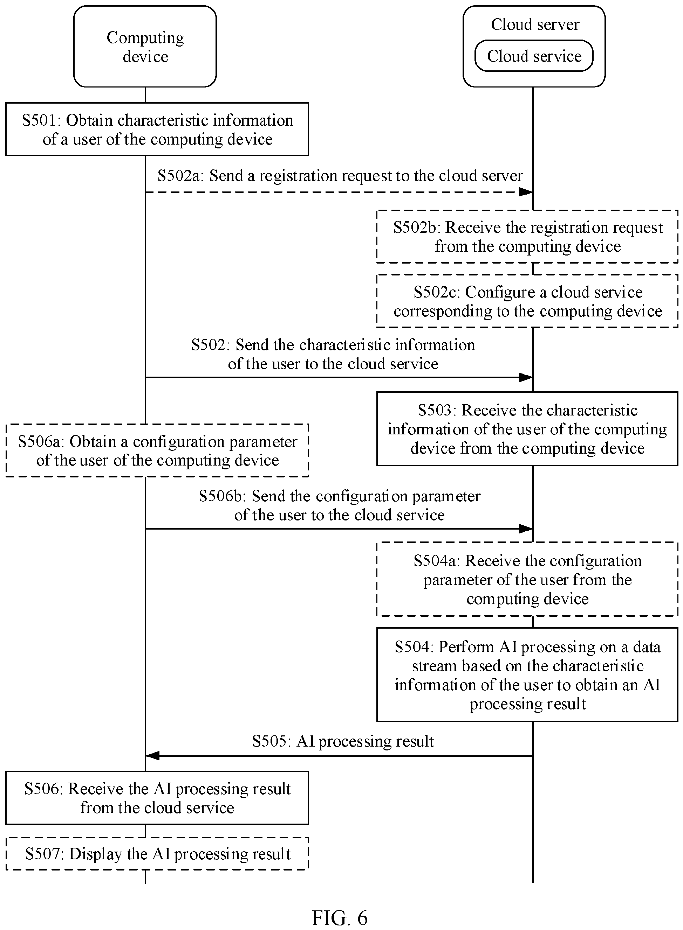

Further, as shown in FIG. 6, after S506, the AI processing method provided in this embodiment of this application may further include S507.

S507: The computing device displays the AI processing result.

Further, as shown in FIG. 6, before S502, the AI processing method provided in this embodiment of this application may further include S502a to S502c.

S502a: The computing device sends a registration request to the cloud server.

The registration request is used to configure the cloud service.

In a possible implementation, when the cloud service corresponds to the computing device, the registration request is used to configure the cloud service corresponding to the computing device.

For example, when the computing device is powered on, or when an APP installed in the computing device is started, S502a may be performed.

S502b: The cloud server receives the registration request from the computing device.

S502c: The cloud server configures the cloud service.

Specifically, the cloud server configures the cloud service in the cloud server. This configuration process is not specifically limited in this application.

In a possible implementation, when the cloud service corresponds to the computing device, the cloud server configures, in the cloud server, the cloud service corresponding to the computing device.

It should be noted that after S502c, the cloud server may further send a registration response message to the computing device, to notify the computing device that the cloud service is configured.

In a possible implementation, in S502c, the cloud server may configure, by using the virtual machine technology or the container technology, the cloud service corresponding to the computing device.

Further, as shown in FIG. 6, before S506, the AI processing method provided in this embodiment of this application may further include S506a.

S506a: The computing device obtains a configuration parameter of the user of the computing device.

The configuration parameter may be entered by the user of the computing device on a human-computer interaction interface of the computing device, or the configuration parameter may be a default parameter of the computing device. The configuration parameter may include one or more of the following content: enabling or disabling an AI function, enabling or disabling a character recognition function, enabling or disabling an object recognition function, enabling or disabling a character psychological activity recognition function, enabling or disabling a character emotion recognition function, or enabling or disabling a scenario recognition function.

Specifically, enabling or disabling the AI function indicates whether to perform AI processing. If the AI function is enabled, AI processing is performed on the data stream of the computing device. If the AI function is disabled, AI processing does not need to be performed on the data stream of the computing device.

Enabling or disabling the character recognition function indicates whether to perform character recognition during AI processing. If the character recognition function is enabled, character recognition is performed when AI processing is performed on the data stream of the computing device. If the character recognition function is disabled, character recognition is not performed when AI processing is performed on the data stream of the computing device.

Enabling or disabling the object recognition function indicates whether to perform object recognition during AI processing. If the object recognition function is enabled, object recognition is performed when AI processing is performed on the data stream of the computing device. If the object recognition function is disabled, object recognition is not performed when AI processing is performed on the data stream of the computing device.

Enabling or disabling the character psychological activity recognition function indicates whether to perform character psychological activity recognition during AI processing. If the character psychological activity recognition function is enabled, character psychological activity recognition is performed when AI processing is performed on the data stream of the computing device. If the character psychological activity recognition function is disabled, character psychological activity recognition is not performed when AI processing is performed on the data stream of the computing device.

Enabling or disabling the character emotion recognition function indicates whether to perform character emotion recognition during AI processing. If the character emotion recognition function is enabled, character emotion recognition is performed when AI processing is performed on the data stream of the computing device. If the character emotion recognition function is disabled, character emotion recognition is not performed when AI processing is performed on the data stream of the computing device.

Enabling or disabling the scenario recognition function indicates whether to perform scenario recognition during AI processing. If the scenario recognition function is enabled, scenario recognition is performed when AI processing is performed on the data stream of the computing device. If the scenario recognition function is disabled, scenario recognition is not performed when AI processing is performed on the data stream of the computing device.

Certainly, content of the configuration parameter may be configured based on an actual requirement. This is not limited in this embodiment of this application.

S506b: The computing device sends the configuration parameter of the user to the cloud service.

Correspondingly, before S504, the AI processing method provided in this embodiment of this application may further include S504a.

S504a: The cloud server receives the configuration parameter of the user from the computing device.

After S504a, in S504, that the cloud server performs AI processing on a data stream of the computing device based on the characteristic information of the user to obtain an AI processing result may be specifically implemented as follows: The cloud server performs AI processing on the data stream of the computing device based on the characteristic information and the configuration parameter to obtain the AI processing result.

Correspondingly, in S506, that the computing device receives the AI processing result from the cloud service may be specifically implemented as follows: The computing device receives the AI processing result from the cloud service. The AI processing result is obtained by the cloud service by performing AI processing on the data stream of the computing device based on the characteristic information and the configuration parameter.

The foregoing mainly describes the solutions provided in the embodiments of this application from a perspective of interaction between the computing device and the cloud server. It may be understood that to implement the foregoing functions, the computing device and the cloud server include corresponding hardware structures and/or software modules for performing the functions. A person of ordinary skill in the art should easily be aware that, in combination with the examples described in the embodiments disclosed in this specification, this application may be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the computing device and the cloud server may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in the embodiments of this application, module division is an example, and is merely a logical function division. In actual implementation, another division manner may be used.

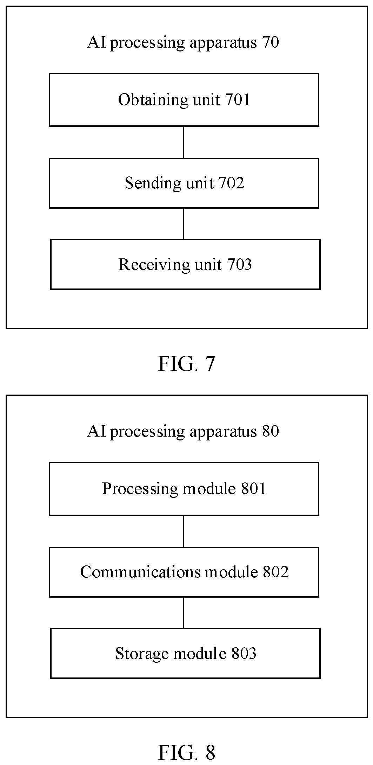

When each function module is obtained through division based on each corresponding function, FIG. 7 shows an AI processing apparatus 70 according to an embodiment of this application, configured to implement a function of the computing device in the foregoing method. The AI processing apparatus 70 may be a computing device, or may be an apparatus in the computing device, or may be an apparatus that can match the computing device. The AI processing apparatus 70 may be a chip system. In this embodiment of this application, the chip system may include a chip, or may include a chip and another discrete device. As shown in FIG. 7, the AI processing apparatus 70 may include an obtaining unit 701, a sending unit 702, and a receiving unit 703. The obtaining unit 701 is configured to perform S501 and S506a in FIG. 5 or FIG. 6. The sending unit 702 is configured to perform S502, S502a, and S506b in FIG. 5 or FIG. 6. The receiving unit 703 is configured to perform S506 in FIG. 5 or FIG. 6. All related content of the steps in the foregoing method embodiments may be cited in function descriptions of corresponding function modules. Details are not described herein again.

When each function module is obtained through division in an integrated manner, FIG. 8 shows an AI processing apparatus 80 according to an embodiment of this application, configured to implement a function of the computing device in the foregoing method. The AI processing apparatus 80 may be a computing device, or may be an apparatus in the computing device, or may be an apparatus that can match the computing device. The AI processing apparatus 80 may be a chip system. The AI processing apparatus 80 includes at least one processing module 801 and a communications module 802. For example, the processing module 801 may be configured to perform S501 and S506a in FIG. 5 or FIG. 6. The processing module 801 may be configured to perform S502, S502a, S506b, and S506 in FIG. 5 or FIG. 6 by using the communications module 802. For details, refer to detailed descriptions in the method examples. Details are not described herein again.

The AI processing apparatus 80 may further include at least one storage module 803, configured to store program instructions and/or data. The storage module 803 is coupled to the processing module 801. The coupling in this embodiment of this application may be indirect coupling or a communication connection between apparatuses, units, or modules in an electrical form, a mechanical form, or another form, and is used for information exchange between the apparatuses, the units, or the modules. The processing module 801 may cooperate with the storage module 802. The processing module 801 may execute the program instructions stored in the storage module 802. At least one of the at least one storage module may be included in the processing module.

When the processing module 801 is a processor, the communications module 802 is a transceiver, and the storage module 803 is a memory, the AI processing apparatus 80 in FIG. 8 in this embodiment of this application may be the AI processing apparatus 40 shown in FIG. 4.

As described above, the AI processing apparatus 70 or the AI processing apparatus 80 provided in this embodiment of this application may be configured to implement the functions of the computing device in the methods implemented in the foregoing embodiments of this application. For ease of description, only a part related to this embodiment of this application is shown. For specific technical details that are not disclosed, refer to the embodiments of this application.

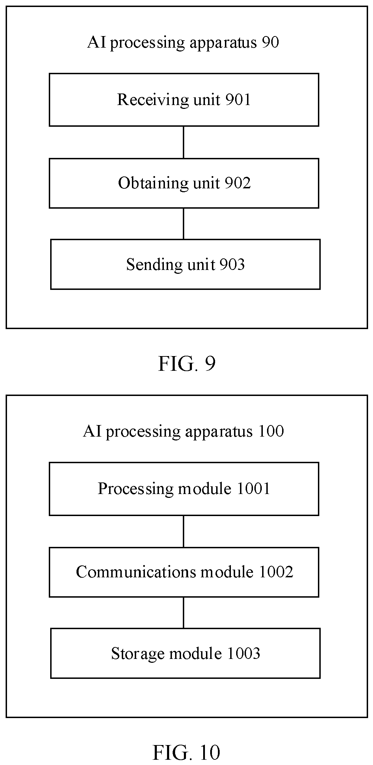

When each function module is obtained through division based on each corresponding function, FIG. 9 shows an AI processing apparatus 90 according to an embodiment of this application, configured to implement a function of the cloud server in the foregoing method. The AI processing apparatus 90 may be a cloud server, or may be an apparatus in the cloud server, or may be an apparatus that can match the cloud server. The AI processing apparatus 90 may be a chip system. In this embodiment of this application, the chip system may include a chip, or may include a chip and another discrete device. As shown in FIG. 9, the AI processing apparatus 90 may include a receiving unit 901, a processing unit 902, and a sending unit 903. The receiving unit 901 is configured to perform S503, S502b, and S504a in FIG. 5 or FIG. 6. The processing unit 902 is configured to perform S504 in FIG. 5 or FIG. 6. The sending unit 903 is configured to perform S505 in FIG. 5 or FIG. 6. All related content of the steps in the foregoing method embodiments may be cited in function descriptions of corresponding function modules. Details are not described herein again.

When each function module is obtained through division in an integrated manner, FIG. 10 shows an AI processing apparatus 100 according to an embodiment of this application, configured to implement a function of the cloud server in the foregoing method. The AI processing apparatus 100 may be a cloud server, or may be an apparatus in the cloud server, or may be an apparatus that can match the cloud server. The AI processing apparatus 100 may be a chip system. The AI processing apparatus 100 includes at least one processing module 1001 and a communications module 1002. For example, the processing module 1001 may be configured to perform S504 in FIG. 5 or FIG. 6. The processing module 1001 may be configured to perform S503, S502b, S504a, and S505 in FIG. 5 or FIG. 6 by using the communications module 1002. For details, refer to detailed descriptions in the method examples. Details are not described herein again.

The AI processing apparatus 100 may further include at least one storage module 1003, configured to store program instructions and/or data. The storage module 1003 is coupled to the processing module 1001. The coupling in this embodiment of this application may be indirect coupling or a communication connection between apparatuses, units, or modules in an electrical form, a mechanical form, or another form, and is used for information exchange between the apparatuses, the units, or the modules. The processing module 1001 may cooperate with the storage module 1002. The processing module 1001 may execute the program instructions stored in the storage module 1002. At least one of the at least one storage module may be included in the processing module.

When the processing module 1001 is a processor, the communications module 1002 is a transceiver, and the storage module 1003 is a memory, the AI processing apparatus 100 in FIG. 10 in this embodiment of this application may be the AI processing apparatus 40 shown in FIG. 4.

As described above, the AI processing apparatus 90 or the AI processing apparatus 100 provided in this embodiment of this application may be configured to implement the functions of the cloud server in the methods implemented in the foregoing embodiments of this application. For ease of description, only a part related to this embodiment of this application is shown. For specific technical details that are not disclosed, refer to the embodiments of this application.

According to some other embodiments of this application, a computer-readable storage medium is further provided. The computer-readable storage medium may include computer software instructions. When the computer software instructions are run on a computing device, the computing device is enabled to perform the steps performed by the computing device in the embodiment shown in FIG. 5 or FIG. 6.

According to some other embodiments of this application, a computer-readable storage medium is further provided. The computer-readable storage medium may include computer software instructions. When the computer software instructions are run on a cloud server, the cloud server is enabled to perform the steps performed by the cloud server in the embodiment shown in FIG. 5 or FIG. 6.

According to some other embodiments of this application, a computer program product is further provided. When the computer program product runs on a computer, the computer is enabled to perform the steps performed by the computing device or the cloud server in the embodiment shown in FIG. 5 or FIG. 6.

According to some other embodiments of this application, a chip system is further provided. The chip system may be applied to a computing device. The chip system includes an interface circuit and a processor. The interface circuit and the processor are interconnected through a line. The interface circuit is configured to receive a signal from a memory of the computing device, and send the signal to the processor. The signal includes computer instructions stored in the memory. When the processor executes the computer instructions, the chip system performs the steps performed by the computing device in the embodiment shown in FIG. 5 or FIG. 6.

According to some other embodiments of this application, a chip system is further provided. The chip system may be applied to a cloud server. The chip system includes an interface circuit and a processor. The interface circuit and the processor are interconnected through a line. The interface circuit is configured to receive a signal from a memory of the cloud server, and send the signal to the processor. The signal includes computer instructions stored in the memory. When the processor executes the computer instructions, the chip system performs the steps performed by the cloud server in the embodiment shown in FIG. 5 or FIG. 6.

According to some other embodiments of this application, an AI processing system is further provided. The AI processing system includes the computing device described in any one of the foregoing embodiments and the cloud server described in any one of the foregoing embodiments.

The foregoing description about the implementations allows a person skilled in the art to clearly understand that, for the purpose of convenient and brief description, division into only the foregoing function modules is used as an example for description. During actual application, the foregoing functions can be allocated to different function modules for implementation as required. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division. There may be another division manner in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, that is, may be located in one place, or may be distributed on a plurality of different places. Some or all of the units may be selected based on actual requirements to achieve the objectives of the solutions in the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, and an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An artificial intelligence AI processing method, wherein the method is applied to a computing device, and the method comprises:
obtaining characteristic information of a user of the computing device, wherein the characteristic information is used to indicate a behavior habit and/or a hobby of the user;
sending the characteristic information to a cloud service; and
receiving an AI processing result from the cloud service, wherein the AI processing result is obtained by the cloud service by performing, based on the characteristic information, AI processing on a data stream of the computing device.

2. The method according to claim 1, wherein the method further comprises:
before the sending the characteristic information to a cloud service, sending a registration request to a cloud server, wherein the registration request is used to configure the cloud service.

3. The method according to claim 1 or 2, wherein the cloud service is a virtual device configured according to a virtual machine technology or a container technology.

4. The method according to any one of claims 1 to 3, wherein the method further comprises:
before the receiving an AI processing result from the cloud service, obtaining a configuration parameter of the user, and sending the configuration parameter to the cloud service, wherein the configuration parameter comprises one or more of the following content: enabling or disabling an AI function, enabling or disabling a character recognition function, enabling or disabling an object recognition function, enabling or disabling a character psychological activity recognition function, enabling or disabling a character emotion recognition function, or enabling or disabling a scenario recognition function; and
the receiving an AI processing result from the cloud service comprises:
receiving the AI processing result from the cloud service, wherein the AI processing result is obtained by the cloud service by performing AI processing on the data stream of the computing device based on the characteristic information and the configuration parameter.

5. An artificial intelligence AI processing method, applied to a cloud server, wherein a cloud service is configured in the cloud server, and the method comprises:
receiving characteristic information of a user of a computing device from the computing device, wherein the characteristic information is used to indicate a behavior habit and/or a hobby of the user;
performing AI processing on a data stream based on the characteristic information, to obtain an AI processing result; and
sending the AI processing result to the computing device.

6. The method according to claim 5, wherein before the performing AI processing on a data stream based on the characteristic information, the method further comprises:
receiving the data stream from a content distribution server.

7. The method according to claim 5 or 6, wherein the cloud service is a virtual device configured according to a virtual machine technology or a container technology.

8. The method according to any one of claims 5 to 7, wherein
the method further comprises: before the performing AI processing on a data stream based on the characteristic information, to obtain an AI processing result, receiving a configuration parameter from the computing device, wherein the configuration parameter comprises one or more of the following content: enabling or disabling an AI function, enabling or disabling a character recognition function, enabling or disabling an object recognition function, enabling or disabling a character psychological activity recognition function, enabling or disabling a character emotion recognition function, or enabling or disabling a scenario recognition function; and
the performing AI processing on a data stream based on the characteristic information, to obtain an AI processing result comprises:
performing AI processing on the data stream based on the characteristic information and the configuration parameter, to obtain the AI processing result.

9. An artificial intelligence AI processing apparatus, wherein the apparatus comprises:
an obtaining unit, configured to obtain characteristic information of a user of the apparatus, wherein the characteristic information is used to indicate a behavior habit and/or a hobby of the user;
a sending unit, configured to send the characteristic information obtained by the obtaining unit to a cloud service; and
a receiving unit, configured to receive an AI processing result from the cloud service, wherein the AI processing result is obtained by the cloud service by performing AI processing on a data stream of the apparatus based on the characteristic information.

10. The apparatus according to claim 9, wherein the sending unit is further configured to:
before the sending the characteristic information to a cloud service, send a registration request to a cloud server, wherein the registration request is used to configure the cloud service.

11. The apparatus according to claim 9 or 10, wherein the cloud service is a virtual device configured according to a virtual machine technology or a container technology.

12. The apparatus according to any one of claims 9 to 11, wherein
the obtaining unit is further configured to: before the receiving unit receives the AI processing result from the cloud service, obtain a configuration parameter of the user, wherein the configuration parameter comprises one or more of the following content: enabling or disabling an AI function, enabling or disabling a character recognition function, enabling or disabling an object recognition function, enabling or disabling a character psychological activity recognition function, enabling or disabling a character emotion recognition function, or enabling or disabling a scenario recognition function;
the sending unit is further configured to send the configuration parameter obtained by the obtaining unit to the cloud service; and
the receiving unit is specifically configured to receive the AI processing result from the cloud service, wherein the AI processing result is obtained by the cloud service by performing AI processing on the data stream of the computing device based on the characteristic information and the configuration parameter.

13. An artificial intelligence (AI) processing apparatus, wherein the apparatus is applied to a cloud server, a cloud service is configured in the cloud server, and the apparatus comprises:
a receiving unit, configured to receive characteristic information of a user of a computing device from the computing device, wherein the characteristic information is used to indicate a behavior habit and/or a hobby of the user;
a processing unit, configured to perform AI processing on a data stream based on the characteristic information obtained by the receiving unit, to obtain an AI processing result; and
a sending unit, configured to send the AI processing result obtained by the processing unit to the computing device.

14. The apparatus according to claim 13, wherein the receiving unit is further configured to:
before the processing unit performs AI processing on the data stream based on the characteristic information, receive the data stream from a content distribution server.

15. The apparatus according to claim 13 or 14, wherein the cloud service is a virtual device configured according to a virtual machine technology or a container technology.

16. The apparatus according to any one of claims 13 to 15, wherein
the receiving unit is further configured to: before the processing unit performs AI processing on the data stream based on the characteristic information to obtain the AI processing result, receive a configuration parameter from the computing device, wherein the configuration parameter comprises one or more of the following content: enabling or disabling an AI function, enabling or disabling a character recognition function, enabling or disabling an object recognition function, enabling or disabling a character psychological activity recognition function, enabling or disabling a character emotion recognition function, or enabling or disabling a scenario recognition function; and
the processing unit is specifically configured to perform AI processing on the data stream based on the characteristic information and the configuration parameter, to obtain the AI processing result.

17. A computing device, wherein the computing device comprises a processor and a memory, the memory is configured to store computer instructions, and the processor is configured to invoke the computer instructions to perform the artificial intelligence (AI) processing method according to any one of claims 1 to 4.

18. A cloud server, wherein the cloud server comprises a processor and a memory, the memory is configured to store computer instructions, and the processor is configured to invoke the computer instructions to perform the artificial intelligence (AI) processing method according to any one of claims 5 to 8.
